# FASCICULE DE BREVET EUROPEEN

(11) **EP 3 569 060 B1**
(45) Date de publication et mention de la délivrance du brevet: **19.07.2023**
(21) Numéro de dépôt: 19172842.7
(22) Date de dépôt: 06.05.2019
(51) Int. Cl.: A01G 17/02, A01G 23/06, A01G 23/04

(54) **PINCE POUR L'ARRACHAGE ET LE PLANTAGE DE PLANT**
GREIFER EINES BAGGERS ZUM HERAUSZIEHEN UND PFLANZUNG VON PFLANZEN
CLAMP FOR HARVESTING AND PLANTING PLANTS

(30) Priorité: 09.05.2018 FR 1853964
(43) Date de publication de la demande: 20.11.2019
(73) Titulaire: Sasu Cutnuts, 46130 Glanes (FR)
(72) Inventeur: FREGEAT, Remi, 46130 Glanes (FR)
(74) Mandataire: Argyma

(56) Documents cités:
- FR-A1- 2 448 845
- US-A- 4 519 739
- US-A1- 2008 282 585

## Description

### DOMAINE TECHNIQUE ET OBJET DE L'INVENTION

La présente invention concerne l'arrachage et la plantation de plants et concerne plus particulièrement une pince pour engin mécanique permettant l'arrachage et la plantation de plants. La pince selon l'invention permet notamment l'arrachage et la plantation de plants, en particulier de plants de vignes, de manière rapide et efficace.

### ETAT DE LA TECHNIQUE

Dans les exploitations agricoles telles que des exploitations arboricoles ou viticoles, certains plants subissent des maladies, des dégradations dues aux conditions climatologiques et ces plants, malades, trop vieux ou morts, doivent être arrachés. Cet arrachage génère de nombreuses contraintes, en particulier dans le cas de l'arrachage des plants de vignes qui peut s'avérer particulièrement délicat.

Les ceps de vigne sont alignés en rangs dans les espaces viticoles. Ces ceps ont des hauteurs différentes en fonction des variétés mises en culture mais ils présentent tous des caractéristiques très voisines. Notamment, leurs racines sont profondes, si bien qu'il y a une forte résistance mécanique à l'arrachage.

Les ceps sont alignés en rangs et avec là aussi des espaces variables entre lesdits ceps en fonction des variétés. Néanmoins, l'espace entre deux ceps est généralement réduit, entre 80 cm et 150 cm à titre d'exemple, ce qui reste très limité pour permettre à un engin mécanique de manoeuvrer lors de l'arrachage des ceps ou de la plantation de nouveaux plants.

Une autre contrainte est de laisser sur place la terre entraînée par les racines de façon à pouvoir combler le trou laissé par le retrait de la partie végétale, tout en retirant le cep avec la majeure partie des racines. En effet, si les racines subsistent dans le sol, à proximité de la surface, des cryptogames peuvent se développer sur ces racines lors de leur pourrissement. Ceci est à exclure car ces cryptogames peuvent contaminer éventuellement les plants voisins d'une part et surtout contaminer les jeunes plants, fragiles, qui viendront en remplacement. On constate que les contraintes liées à une opération d'arrachage doivent respecter de nombreux impératifs.

Il existe plusieurs solutions pour l'arrachage de ceps de vigne. Dans une solution, une tarière équipée d'une cloche motorisée permet de découper les racines de la vigne et de retirer un cylindre de terre et le pied du cep de vigne. Les problèmes et inconvénients sont nombreux. Tout d'abord, on comprend que seule la partie des racines découpée par la cloche et située à l'intérieur est retirée. Il subsiste donc une forte partie des racines en terre, notamment les racines de surface. De plus, la cloche conduit à un compactage de la paroi de terre périphérique à la paroi extérieure de ladite cloche. Ceci est regrettable car la reprise du jeune plant qui devra être implanté en remplacement sera plus difficile. On note également que lorsque la cloche de la tarière est retirée, le pied du cep est retiré mais également la terre qui y est associée, comme une carotte de forage, surtout en terrain argileux. Au retrait de la cloche et de sa carotte de terre et de végétal, il subsiste un trou qui a du mal à se combler de façon naturelle. Il faut donc rajouter de la terre pour pouvoir replanter un plant. Par ailleurs, la terre est difficile à retirer des racines du cep car elle a été compactée. Afin de pouvoir opérer, il est nécessaire de faire tourner la cloche suivant un axe vertical et donc centré sur l'axe du rang. Les fils de palissage se trouvent justement sur cet axe, si bien qu'il faut exercer un effort sur les fils de palissage pour les courber, laisser passer l'arbre d'entraînement de la cloche et travailler sur l'axe. Un inconvénient très important, lié à ce mode d'arrachage, est de rendre nécessaire deux interventions successives la première étant la coupe de la partie haute du cep au niveau du sol de façon à permettre le positionnement de la cloche de la tarière et la seconde étant l'opération d'arrachage proprement dite avec ladite cloche de la tarière. Enfin, l'utilisation d'une telle tarière peut s'avérer particulièrement chronophage.

Dans une autre solution, une tête d'arrachage comprenant des dents est montée sur un tracteur ou le bras d'une mini-pelle afin d'arracher les plants de vigne. Cette solution nécessite de faire pénétrer les dents sous les ceps, ce qui peut s'avérer fastidieux voire impossible dans certains cas, notamment lorsque la terre est compacte. De plus, de telles dents ne permettent souvent que d'arracher les racines situées en surface, ce qui présente un inconvénient important en cas de replantage de nouveaux plants qui ne pourront s'épanouir pleinement, voire ne pas pousser du tout.

De plus, avec toutes ces solutions, il est nécessaire de replanter les nouveaux plants manuellement, ce qui est long et fastidieux et présente donc des inconvénients majeurs.

Les documents US 2008/282585 A1 et US 4 519 739 A illustrent pour exemple des pinces montée sur un bras d'engin mécanique.

Le document FR 2 448 845 A1 illustre un autre exemple de dispositif de plantage de plants muni de deux pinces biseautées.

L'invention vise à résoudre au moins en partie ces inconvénients en proposant une solution fiable, efficace et robuste d'arrachage et de plantation de plants, notamment de plants de vignes.

### PRESENTATION GENERALE DE L'INVENTION

A cet effet, l'invention selon la revendication 1, a tout d'abord pour objet une pince pour l'arrachage et la plantation de plants en terre, notamment de plants de vigne, destinée à être montée sur un bras d'un engin mécanique, ladite pince étant remarquable en ce qu'elle comprend un organe d'actionnement et deux mâchoires configurées pour être déplacées par ledit organe d'actionnement entre une position fermée, dans laquelle lesdites mâchoires délimitent un espace interne et sont en contact et complémentaires l'une avec l'autre afin d'éviter de permettre à la terre de pénétrer dans ledit espace interne, et au moins une position ouverte dans laquelle les mâchoires sont écartées l'une de l'autre, notamment afin de pouvoir saisir un plant, les mâchoires comprenant chacune une extrémité proximale et une extrémité distale et étant articulées au niveau de leurs extrémités proximales, les extrémités distales des mâchoires étant configurées à la fois pour décompacter la terre, notamment grâce à leur forme profilée et notamment autour des racines d'un plant, et pour saisir un plant en terre afin de l'arracher hors de terre, l'une ou l'autre des mâchoires étant pourvue, entre son extrémité proximale et son extrémité distale, d'une ouverture d'accès à l'espace interne, formé entre les mâchoires en position fermée, permettant l'insertion d'un plant dans ledit espace interne afin que ledit plant puisse être planté en terre lors d'un déplacement des mâchoires dans une position ouverte permettant sa libération.

La pince selon l'invention est un accessoire qui est notamment destiné à être monté à l'extrémité d'un bras mécanisé d'un engin mécanique tel qu'un tracteur muni d'un bras articulé ou une mini-pelle par exemple. La pince selon l'invention constitue un outil remplissant une double fonction d'arrachage de plants et de plantation de plants, ce qui évite notamment d'utiliser deux outils différents pour réaliser ces deux fonctions et permet un arrachage et une plantation efficace et rapide des plants. Lors de l'arrachage d'un plant, les extrémités distales des mâchoires permettent dans un premier temps de décompacter la terre autour des racines du plant, puis d'arracher le plant une fois la terre décompactée, ce qui permet notamment d'éviter d'arracher uniquement la partie du plant qui est à la surface en laissant les racines en terre. Le plant peut ainsi être arraché dans sa totalité ou quasiment dans sa totalité, ce qui permet de replanter un nouveau plant dans une terre dépourvue (ou quasiment dépourvue) d'anciennes racines. La pince selon l'invention permet ainsi un arrachage rapide et efficace des plants. Par ailleurs, l'ouverture d'accès permet à un opérateur ou à un organe mécanisé de distribution d'insérer un plant dans l'espace interne formé entre les mâchoires en position fermée de sorte que, lorsque les mâchoires sont enfoncées dans un volume de terre décompactée, leur ouverture libère le plant et leur retrait achève la plantation dudit plant. La pince selon l'invention permet donc de planter un plant simplement et efficacement, réduisant ainsi significativement le temps nécessaire pour réaliser une telle plantation. La pince selon l'invention permet en outre avantageusement d'arracher un plant ou de planter un plant en présence d'un palissage, par exemple de rangs de vigne, sans l'endommager, un palissage étant fastidieux à réparer lorsqu'il est endommagé ou brisé. De plus, l'utilisation de la pince sur le bras d'un engin mécanique, permet d'arracher des plants ou de planter des plants lorsque les espaces entre les rangs de plants sont relativement étroits. Enfin, l'espace interne est étanche à la terre en position fermée des mâchoires lorsque ces dernières s'enfoncent dans la terre, ce qui permet avantageusement d'enfoncer les mâchoires en position fermée dans la terre tout en gardant libre et intact l'espace interne afin de pouvoir y insérer un plant à planter lorsque les extrémités distales des mâchoires sont enfoncées au niveau du volume de terre où l'on souhaite libérer la base du plant.

Selon un aspect de l'invention, les extrémités distales des mâchoires présentent une forme biseautée permettant de décompacter efficacement la terre. De préférence, l'angle aigu formé par la portion biseauté de chaque extrémité distale est inférieur à 30°. La portion biseautée de chaque extrémité distale peut par exemple présenter une section triangulaire ou tronconique.

De préférence, au moins l'une des extrémités distales des mâchoires comprend au moins une dent de décompactage, permettant de conférer à la pince une fonction de griffe de décompactage permettant d'effectuer un décomptage efficace de la terre, notamment en position fermée des mâchoires.

Dans une forme de réalisation, la pince comprenant une première mâchoire, supérieure, et une deuxième mâchoire, inférieure, l'extrémité distale de la deuxième mâchoire comprend deux dents de décompactage pour rendre la fonction de griffe de décompactage davantage efficace tout en permettant la saisie et l'arrachage d'un plant.

De manière avantageuse, chaque mâchoire comprend, entre son extrémité proximale et son extrémité distale, deux pluralités de dents de préhension disposées chacune d'un côté de ladite mâchoire afin de saisir et d'arracher un plant sur une grande longueur, par exemple plus de 30 cm.

De préférence, les deux pluralités de dents de préhension d'une mâchoire sont complémentaires des deux pluralités de dents de préhension de l'autre mâchoire afin de saisir et d'arracher efficacement le plant.

En variante, les mâchoires peuvent être dépourvues de dents de préhension.

Selon une caractéristique de l'invention, chaque extrémité distale des mâchoires comprend une face interne plane, les deux faces internes planes se faisant face lorsque la pince est en position fermée. La pince présente ainsi une fonction de serrage qui permet de saisir un plant, notamment pour l'arracher ou le déplacer ou pour déplacer tout autre objet de dimensions adaptées.

Dans une forme de réalisation, au moins l'une des mâchoires présente une forme concave afin d'éviter que de la terre ne rentre en force la lorsque la pince est insérée dans un volume de terre.

Avantageusement, l'organe d'actionnement comprend au moins un vérin, de préférence hydraulique, relié par une extrémité à l'une des mâchoires et par son autre extrémité à l'autre des mâchoires de sorte à les écarter ou à les rapprocher l'une de l'autre. L'utilisation de plusieurs vérins peut permettre d'augmenter la puissance des mâchoires et donc l'efficacité de la pince, notamment pour une utilisation dans une terre ferme ou dure.

Dans une forme de réalisation préférée de la pince selon l'invention, l'organe d'actionnement comprend un unique vérin relié par une extrémité à l'une des mâchoires et par son autre extrémité à l'autre des mâchoires de sorte à les écarter ou à les rapprocher l'une de l'autre. L'utilisation d'un unique vérin permet de simplifier la structure de la pince et d'en réduire le coût.

Avantageusement, la pince comprend au moins un graisseur permettant d'effectuer le graissage du ou des vérins et/ou des axes d'articulation de la pince.

Selon une caractéristique de l'invention, la pince comprend un ou plusieurs connecteurs permettant de relier un ou plusieurs flexibles de commande hydraulique du ou des vérins. De préférence, la pince comprend deux connecteurs permettant de relier deux flexibles de commande hydraulique pour respectivement ouvrir et fermer les mâchoires.

De manière avantageuse, les extrémités proximales des mâchoires sont montées de manière articulée autour d'un même axe.

Selon un aspect de l'invention, la pince comprend une platine de fixation configurée pour fixer la pince à l'extrémité d'un bras d'un engin mécanique.

De préférence, la platine de fixation montée au niveau des extrémités proximales des mâchoires, par exemple par soudage.

Dans une forme de réalisation, la pince comprend en outre un module de distribution de plants apte à stocker une pluralité de plants et à les distribuer un par un dans l'ouverture d'accès. Ce module de distribution peut être actionné manuellement par un opérateur, par exemple à distance, ou être automatisé et permet d'éviter à un opérateur d'insérer les plants manuellement dans l'espace interne.

L'invention concerne également un engin mécanique comprenant un bras, comportant une extrémité de fixation, et une pince telle que présentée précédemment, montée sur ladite extrémité de fixation.

Selon un aspect de l'invention, l'engin comprend un poste de pilotage et un module de contrôle de la pince apte à permettre le contrôle de l'organe d'actionnement de la pince par un opérateur positionné dans ledit poste de pilotage.

L'invention concerne aussi un procédé d'arrachage d'un plant enraciné en terre, notamment un plant de vigne, qui se trouve hors de la portée des revendications, ledit procédé, mis en oeuvre par une pince montée sur un bras d'un engin mécanique, ladite pince comprenant un organe d'actionnement et deux mâchoires configurées pour être déplacées par ledit organe d'actionnement de sorte à les écarter ou à les rapprocher l'une de l'autre, les mâchoires comprenant chacune une extrémité proximale et une extrémité distale et étant reliées au niveau de leurs extrémités proximales, les extrémités distales des mâchoires étant configurées à la fois pour décompacter la terre, notamment autour des racines d'un plant, chaque mâchoire comprenant, entre son extrémité proximale et son extrémité distale, deux pluralités de dents de préhension disposées chacune d'un côté de ladite mâchoire pour saisir un plant en terre afin de l'arracher hors de terre, ledit procédé comprenant une étape de décompactage d'un volume de terre entourant les racines dudit plant, une étape de saisie du plant par les dents de préhension et une étape d'arrachage du plant hors de terre.

L'invention selon la revendication 15 concerne aussi un procédé de plantation d'un plant en terre, notamment un plant de vigne, ledit procédé, mis en oeuvre par une pince montée sur un bras d'un engin mécanique, ladite pince comprenant un organe d'actionnement et deux mâchoires configurées pour être déplacées par ledit organe d'actionnement entre une position fermée, dans laquelle lesdites mâchoires délimitent un espace interne et sont en contact et complémentaires l'une avec l'autre afin d'éviter de permettre à la terre de pénétrer dans ledit espace interne lorsque les mâchoires sont enfoncées dans le sol, et au moins une position ouverte, les mâchoires comprenant chacune une extrémité proximale et une extrémité distale et étant reliées au niveau de leurs extrémités proximales, les extrémités distales des mâchoires étant configurées pour décompacter un volume de terre destiné à recevoir le plant, l'une ou l'autre des mâchoires étant pourvue, entre son extrémité proximale et son extrémité distale d'une ouverture d'accès à l'espace interne formé entre les mâchoires en position fermée afin de permettre l'insertion d'un plant dans ledit espace interne, ledit procédé comprend une étape de décompactage d'un volume de terre, réalisée de préférence avec la pince en position fermée, une étape de positionnement de la pince en position fermée dans le volume de terre décompacté, une étape d'insertion d'un plant dans l'ouverture d'accès jusqu'à l'espace interne, une étape d'ouverture des mâchoires afin de libérer le plant dans le volume de terre décompacté, et une étape de retrait de la pince pour finaliser la plantation du plant.

Avantageusement, une fois le plant en place, la pince peut être utilisée, de préférence en position fermée, pour niveler et tasser la terre autour du plan.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- la figure 1 est une vue en perspective de côté d'une forme de réalisation de la pince selon l'invention, en position fermée des mâchoires,
- la figure 2 est une vue en perspective de côté de la pince de la figure 1, en position fermée des mâchoires,
- la figure 3 est une vue en perspective de face et de dessus de la pince de la figure 1 en position ouverte des mâchoires,
- la figure 4 est une vue en perspective de derrière de la pince de la figure 1, en position ouverte des mâchoires,
- la figure 5 est une autre vue en perspective de derrière de la pince de la figure 1, en position fermée des mâchoires.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

La pince selon l'invention est destinée à être montée sur un engin mécanique, notamment à l'extrémité d'un bras mécanisé, par exemple d'une pelleteuse, d'un tractopelle, d'un tracteur ou de tout engin mécanique adapté, notamment agricole ou de chantier. La pince selon l'invention constitue un outil capable à la fois d'arracher et de planter des plants, en particulier des plants de vigne.

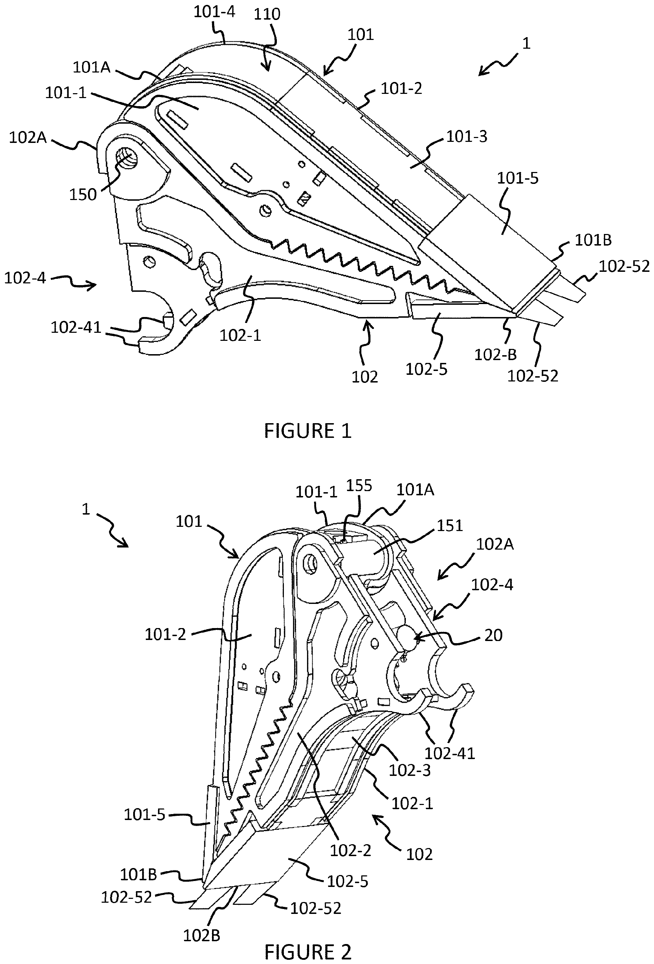

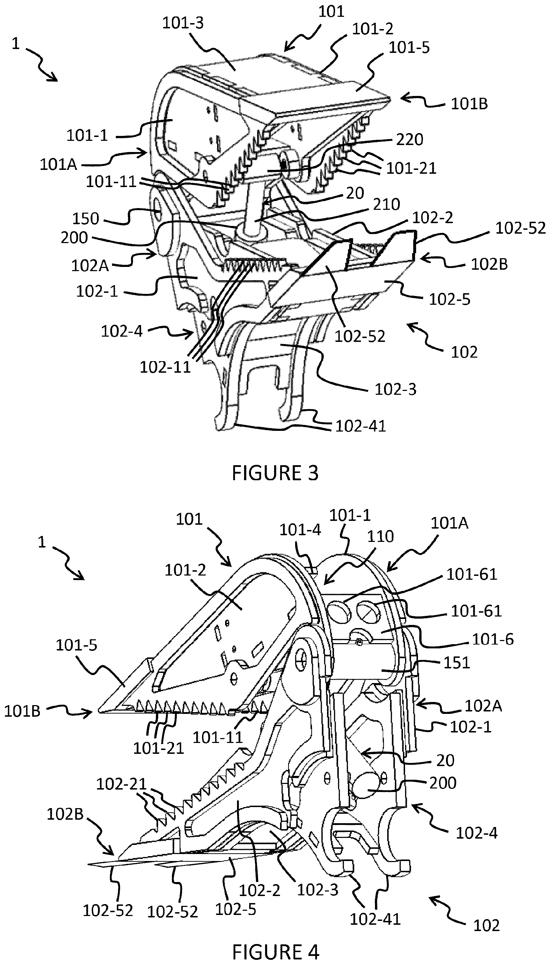

On a représenté à la figure 1 une forme de réalisation d'une pince 1 selon l'invention. Dans cet exemple, la pince 1 comprend un organe d'actionnement, se présentant dans cet exemple sous la forme d'un vérin 20 hydraulique (visible sur les figures 3 à 5), une mâchoire supérieure 101 et une mâchoire inférieure 102.

La mâchoire supérieure 101 et la mâchoire inférieure 102 sont aptes à être actionnées par le vérin 20 afin de s'écarter et à se rapprocher l'une de l'autre (i.e. ouvrir et refermer la pince 1) pour pouvoir saisir et arracher un plant. Plus précisément, la mâchoire supérieure 101 et la mâchoire inférieure 102 sont configurées pour être déplacées par ledit vérin 20 entre une position fermée (figures 1, 2 et 5), dans laquelle la mâchoire supérieure 101 et la mâchoire inférieure 102 sont en contact l'une avec l'autre, et au moins une position ouverte (figures 3 et 4) dans laquelle la mâchoire supérieure 101 et la mâchoire inférieure 102 sont écartées l'une de l'autre afin de pouvoir saisir un plant. La mâchoire supérieure 101 et la mâchoire inférieure 102 peuvent s'écarter l'une de l'autre jusqu'à une position ouverte maximum qui définit l'ouverture maximale de la pince 1.

La mâchoire supérieure 101 comprend une extrémité proximale 101A et une extrémité distale 101B. De même, la mâchoire inférieure 102 comprend une extrémité proximale 102A et une extrémité distale 102B.

Comme illustré sur la figure 1, la mâchoire supérieure 101 et la mâchoire inférieure 102 sont articulées, au niveau de leurs extrémités proximales 101A, 102A, autour d'une liaison pivot matérialisée par un axe d'articulation 150.

La mâchoire supérieure 101 comprend deux parois latérales 101-1, 101-2 et une paroi supérieure 101-3 qui délimitent une ouverture d'accès 101-4 à un espace interne 110 formé entre la mâchoire supérieure 101 et la mâchoire inférieure 102 lorsque la mâchoire supérieure 101 et la mâchoire inférieure 102 sont en position fermée. L'ouverture d'accès 101-4 permet de rendre l'espace interne 110 accessible depuis l'extérieur ou depuis un module de distribution automatique monté sur la pince 1, comme cela sera décrit ci-après. L'espace interne 110 est configuré pour recevoir un plant inséré via l'ouverture d'accès 101-4 de manière à permettre sa plantation en terre lorsque la mâchoire supérieure 101 et la mâchoire inférieure 102 sont suffisamment écartées l'une de l'autre pour autoriser la libération du plant en terre entre les extrémités distales 101B, 102B respectivement de la mâchoire supérieure 101 et de la mâchoire inférieure 102. En position fermée des mâchoires 101, 102, l'espace interne 110 reste étanche à la terre lorsque les extrémités distales 101B, 102B des mâchoires 101, 102 s'enfoncent dans la terre de sorte qu'un plant puisse être inséré dans l'espace interne 110 via l'ouverture d'accès 101-4 lorsque les mâchoires 101, 102 sont enfoncées dans la terre.

Lorsque la pince 1 est dans une position ouverte, l'espace interne 110 débouche à l'extérieur de la pince 1, entre les extrémités distales 101B, 102B entre les mâchoires 101, 102. Afin de guider les plants, l'espace interne 110 peut comprendre des moyens de guidage (non représentés) pouvant par exemple se présenter sous la forme de deux lamelles souples, par exemple en caoutchouc, fixées chacune sur la face interne de chaque paroi latérale 101-1, 101-2, de part et d'autre dans l'ouverture d'accès 101-4, de manière à guider les plants vers les extrémités distales 101B, 102B de la mâchoire supérieure 101 et de la mâchoire inférieure 102.

La mâchoire inférieure 102 comprend deux parois latérales 102-1, 102-2, une paroi inférieure 102-3 et une portion arrière de fixation 102-4, située au niveau de l'extrémité proximale 102A de la mâchoire inférieure 102. La portion arrière de fixation 102-4 est configurée pour recevoir, par exemple par soudage, une platine de fixation (non représentée mais connue en soi) permettant de monter la pince 1 sur l'extrémité d'un bras d'un engin mécanique. A cette fin, l'extrémité proximale 102A de la mâchoire inférieure 102 comprend notamment deux pattes 102-41 configurées pour être montées sur un axe d'appui de ladite platine de fixation, par exemple de type MORIN^{®}.

Les extrémités distales 101B, 102B respectivement de la mâchoire supérieure 101 et de la mâchoire inférieure 102 sont configurées à la fois pour décompacter la terre, notamment autour des racines d'un plant, et pour saisir un plant en terre afin de l'arracher hors de terre.

A cette fin, dans l'exemple illustré, les extrémités distales 101B, 102B de la mâchoire supérieure 101 et de la mâchoire inférieure 102 présentent une forme biseautée, de section sensiblement triangulaire, et comporte chacune une plaque de renfort 101-5, 102-5, de préférence réalisé en un métal dur suffisamment résistant pour résister à l'abrasion et décompacter la terre. Dans cet exemple non limitatif, la plaque de renfort 102-5 montée au niveau de l'extrémité distale 102B de la mâchoire inférieure 102 comprend deux dents de décompactage 102-52 aptes à être enfoncées dans un sol meuble, tel que par exemple une surface de terre agricole, conférant ainsi une fonction de griffe à la pince 1 permettant un de décompactage efficace et rapide. Les dents de décompactage 102-52 peuvent être issues de matières de la mâchoire inférieure 102 ou de la plaque de renfort 102-5 de la mâchoire inférieure 102, ou bien rapportées sur la mâchoire inférieure 102 ou sur la plaque de renfort 102-5 de la mâchoire inférieure 102.

Comme illustré sur la figure 1, la mâchoire supérieure 101, mobile par rapport à la mâchoire inférieure 102, est légèrement en retrait de ladite mâchoire inférieure 102 de sorte que l'effort soit reçu par la mâchoire inférieure 102, notamment par les dents de décompactage 102-52, lors de l'insertion de la pince 1 en terre. Ceci permet un décompactage efficace de la terre par la mâchoire inférieure 102 qui remplit une fonction de griffe de décompactage.

En référence aux figures 3 et 4, afin de saisir efficacement les plants, la mâchoire supérieure 101 et la mâchoire inférieure 102 comprennent chacune, entre son extrémité proximale 101A, 102A et son extrémité distale 101B, 102B, deux séries de dents de préhension 101-11, 101-21, 102-11, 102-21 disposées chacune sur un bord des parois 101-1, 101-2, 102-1, 102-2 de la mâchoire supérieure 101 et de la mâchoire inférieure 102. Les séries de dents de préhension 101-11, 101-21, 102-11, 102-21 sont arrangées au droit les unes des autres deux à deux et sont complémentaires de sorte que leurs formes s'épousent en position fermée de la pince 1. Les séries de dents de préhension 101-11, 101-21, 102-11, 102-21 permettent un maintien efficace du plant lors de l'arrachage. La complémentarité respectives des séries de dents de préhension 101-11, 101-21 de la mâchoire supérieure 101 et des séries de dents de préhension 102-11, 102-21 de la mâchoire inférieure 102 permet en outre de maintenir la mâchoire supérieure 101 et la mâchoire inférieure 102 l'une contre l'autre sans aucun jeu entre elles ou avec un jeu très faible, par exemple inférieure à 1 cm, lorsque la pince 1 est fermée afin notamment de permettre la pénétration des extrémités distales 101B, 102B pointues dans un volume de terre décompactée tout en empêchant efficacement la terre de pénétrer dans l'espace interne 110. On notera que, dans une autre forme de réalisation, les mâchoires 101, 102 pourraient être dépourvues de dents de préhension.

Comme mentionné précédemment, la pince 1 comprend un axe d'articulation 150 formant la liaison pivot autour de laquelle la mâchoire supérieure 101 et la mâchoire inférieure 102 sont articulées. L'axe d'articulation 150 est inséré dans un cylindre 151 de section circulaire sur lequel un graisseur 155 est monté afin de permettre le graissage dudit axe d'articulation 150.

Le vérin 20 est relié à un module de contrôle (non représenté) de l'engin mécanique via deux flexibles de commande hydraulique (non représentés) qui permettent de contrôler ledit vérin 20, de manière connue en soi. Dans l'exemple illustré, en référence à la figure 3, le vérin 20 hydraulique comprend un cylindre 200, relié à la mâchoire inférieure 102, et un piston en forme de T, comportant une tige 210 cylindrique de section circulaire et un axe de liaison 220. L'axe de liaison 220 est relié à la mâchoire supérieure 101. La tige 210 est configurée pour coulisser dans le cylindre 200. Le module de contrôle permet, via les flexibles de commande hydraulique, de contrôler la pression hydraulique dans le cylindre 200 de sorte à faire coulisser la tige 210 du piston dans le cylindre 200 dans un sens ou dans l'autre, permettant ainsi d'écarter ou de rapprocher la mâchoire supérieure 101 et la mâchoire inférieure 102. Le vérin 20 permet ainsi d'articuler la mâchoire supérieure 101, mobile, relativement à la mâchoire inférieure 102, fixe lorsque le bras de l'engin est immobile.

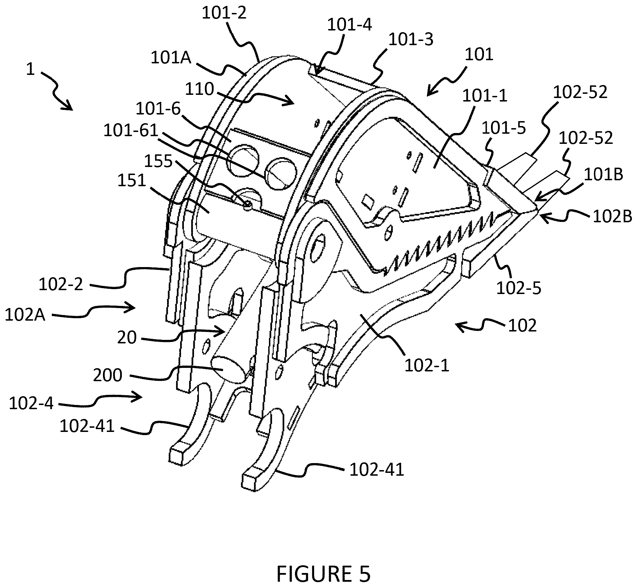

Comme illustré sur les figures 4 et 5, la pince 1 comprend en outre, dans cet exemple non limitatif, une plaque de support 101-6 délimitant deux orifices 101-61 à travers lesquelles peuvent être insérés les flexibles de commande hydraulique afin de les maintenir en place lors de l'utilisation de la pince 1.

On notera que la mâchoire inférieure 102 (ou la mâchoire supérieure 101) pourrait présenter une forme concave afin d'éviter que de la terre ne rentre en force lorsque la pince 1 est insérée dans un volume de terre.

Un module de distribution automatique (non illustré) peut être monté sur la pince 1 afin de permettre l'insertion (i.e. la charge) automatique des plants dans l'espace interne 110, via l'ouverture d'accès 101-4. A cette fin, le module de distribution automatique peut comprendre un mécanisme qui délivre un plant sur commande manuelle (i.e. d'un opérateur) ou programmée. Ce mécanisme peut comprendre un caisson de stockage et une trappe qui s'ouvre pour libérer un plant dudit caisson de stockage vers l'ouverture d'accès 101-4 et se ferme pour empêcher les plants de quitter le caisson de stockage.

Lorsqu'un opérateur souhaite arracher et replanter des plants, notamment de vignes, il fixe tout d'abord la pince 1 sur le bras d'un engin mécanique, par exemple une mini-pelle, et connecte, à travers chacun des orifices 101-61, un flexible de commande hydraulique au vérin 20. L'opérateur actionne le bras mécanique de l'engin de manière à enfoncer la pince 1 en position fermée sous le plant à arracher pour décompacter la terre, une ou plusieurs fois.

Ensuite, l'opérateur actionne le bras mécanique de l'engin de manière à disposer la pince 1 au droit d'un plant à arracher. L'opérateur actionne, via le module de contrôle, les flexibles et le vérin, la mâchoire supérieure 101 et la mâchoire inférieure 102 de la pince 1 en position ouverte de sorte que la mâchoire supérieure 101 et la mâchoire inférieure 102 viennent autour du plant puis actionne le vérin 20 pour que ledit vérin 20 referme la mâchoire supérieure 101 et la mâchoire inférieure 102 et que les dents de préhension 101-11, 101-21,102-11, 102-21 saisissent le plant.

L'opérateur actionne ensuite le bras de l'engin mécanique pour que ledit bras remonte et arrache le plant de la terre, la mâchoire supérieure 101 et la mâchoire inférieure 102 étant toujours fermées sur le plant.

Une fois le plant arraché, l'opérateur actionne le bras pour le déplacer sur un côté puis actionne le vérin 20, toujours via le module de contrôle et le câble d'alimentation, pour ouvrir les mâchoires la mâchoire supérieure 101 et la mâchoire inférieure 102 et libérer le plant. Le plant peut par exemple être libéré dans une remorque tractée ou portée par la mini-pelle qui peut également contenir un stock de plant à planter, de l'engrais, etc.

Lorsque l'opérateur souhaite replanter un plant, l'opérateur ferme la mâchoire supérieure 101 et la mâchoire inférieure 102 l'une contre l'autre (position fermée) puis actionne le bras de sorte que les extrémités distales 101B, 102B de la mâchoire supérieure 101 et de la mâchoire inférieure 102 s'enfoncent dans le sol à l'endroit voulu pour planter le plant, empêchant ainsi la terre de pénétrer dans l'espace interne 110. Un plant à planter est ensuite introduit dans l'espace interne 110, qui est libre, par l'ouverture d'accès 101-4, soit manuellement, soit via le module de distribution automatique lorsque la pince 1 en est équipée.

L'opérateur ouvre ensuite la mâchoire supérieure 101 et la mâchoire inférieure 102 afin d'écarter la terre et libérer le plant dans le sol à l'endroit de la plantation, puis retire la pince 1, la base du plant étant alors planté en terre. L'opérateur peut ensuite avantageusement manoeuvrer la pince 1 en position fermée pour niveler la terre autour du plant qui vient d'être planté.

La pince 1 selon l'invention possède avantageusement une double fonction d'arrachage et de plantation de plants. L'utilisation d'une pince 1 permet un arrachage efficace et rapide. La forme biseautée de la pince 1 permet notamment d'introduire la pince 1 dans la terre. L'espace interne 110 formé entre la mâchoire supérieure 101 et la mâchoire inférieure 102 permet de libérer un plant dans le sol lorsque la pince 1 s'ouvre alors qu'elle est enfoncée dans le sol ou positionnée au droit d'un trou de plantation formé dans le sol de manière à planter ledit plant.

## Revendications

1. Pince (1) pour l'arrachage et la plantation de plants en terre, notamment de plants de vigne, destinée à être montée sur un bras d'un engin mécanique, ladite pince (1) comprend un organe d'actionnement (20) et deux mâchoires (101, 102) configurées pour être déplacées par ledit organe d'actionnement (20) entre une position fermée, dans laquelle lesdites mâchoires (101, 102) délimitent un espace interne (110), et au moins une position ouverte dans laquelle les mâchoires (101, 102) sont écartées l'une de l'autre afin de pouvoir saisir un plant, les mâchoires (101, 102) comprenant chacune une extrémité proximale (101A, 102A) et une extrémité distale (101B, 102B) et étant articulées au niveau de leurs extrémités proximales (101A, 102A), les extrémités distales des mâchoires (101, 102) étant configurées à la fois pour décompacter la terre, notamment autour des racines d'un plant, et pour saisir un plant en terre afin de l'arracher hors de terre, l'une ou l'autre des mâchoires (101, 102) étant pourvue, entre son extrémité proximale (101A, 102A) et son extrémité distale (101B, 102B), d'une ouverture d'accès (101-4) à l'espace interne (110) permettant l'insertion d'un plant dans ledit espace interne (110) afin que ledit plant puisse être planté en terre lors d'un déplacement des mâchoires (101, 102) dans une position ouverte permettant sa libération,
ladite pince étant **caractérisée en ce que** en position fermée, lesdites mâchoires (101, 102) sont en contact et complémentaires l'une de l'autre afin d'éviter de permettre à la terre de pénétrer dans ledit espace interne (110).

2. Pince (1) selon la revendication 1, dans laquelle les extrémités distales (101B, 102B) des mâchoires (101, 102) présentent une forme biseautée.

3. Pince (1) selon la revendication précédente, dans laquelle l'angle aigu formé par la portion biseautée de chaque extrémité distale (101B, 102B) est inférieur à 30°.

4. Pince (1) selon l'une des revendications 2 ou 3, dans laquelle la portion biseautée de chaque extrémité distale (101B, 102B) présente une section triangulaire ou tronconique.

5. Pince (1) selon l'une des revendications précédentes, dans laquelle au moins l'une des extrémités distales (101B, 102B) des mâchoires (101, 102) comprend au moins une dent de décompactage (102-52).

6. Pince (1) selon la revendication précédente, dans laquelle, la pince (1) comprenant une première mâchoire (101), supérieure, et une deuxième mâchoire (102), inférieure, l'extrémité distale (102B) de la deuxième mâchoire (102) comprend deux dents de décompactage (102-52).

7. Pince (1) selon l'une des revendications précédentes, dans laquelle chaque mâchoire (101, 102) comprend, entre son extrémité proximale (101A, 102A) et son extrémité distale (101B, 102B), deux pluralités de dents de préhension (101-11, 101-21, 102-11, 102-21) disposées chacune d'un côté de ladite mâchoire (101, 102).

8. Pince (1) selon la revendication précédente, dans laquelle les deux pluralités de dents de préhension (101-11, 101-21) d'une mâchoire (101) sont complémentaires des deux pluralités de dents de préhension (102-11, 102-21) de l'autre mâchoire (102).

9. Pince (1) selon l'une des revendications précédentes, dans laquelle chaque extrémité distale (101B, 102B) des mâchoires (101, 102) comprend une face interne plane, les deux faces internes planes se faisant face lorsque la pince (1) est en position fermée.

10. Pince (1) selon l'une des revendications précédentes, dans laquelle au moins l'une des mâchoires (101, 102) présente une forme concave.

11. Pince (1) selon l'une des revendications précédentes, dans laquelle l'organe d'actionnement comprend au moins un vérin (20) hydraulique relié par une extrémité à l'une des mâchoires (101, 102) et par son autre extrémité à l'autre des mâchoires (101, 102) de sorte à les écarter ou à les rapprocher l'une de l'autre.

12. Pince (1) selon l'une des revendications précédentes, comprenant une platine de fixation configurée pour fixer la pince (1) à l'extrémité d'un bras d'un engin mécanique.

13. Pince (1) selon l'une des revendications précédentes, comprenant en outre un module de distribution de plants apte à stocker une pluralité de plants et à les distribuer un par un dans l'ouverture d'accès (101-4).

14. Engin mécanique comprenant un bras, comportant une extrémité de fixation, et une pince (1), selon l'une des revendications précédentes, montée sur ladite extrémité de fixation.

15. Procédé de plantation d'un plant en terre, notamment un plant de vigne, ledit procédé, mis en oeuvre par une pince (1) montée sur un bras d'un engin mécanique, ladite pince (1) comprenant un organe d'actionnement (20) et deux mâchoires (101, 102) configurées pour être déplacées par ledit organe d'actionnement (20) entre une position fermée, dans laquelle lesdites mâchoires (101, 102) délimitent un espace interne (110) et sont en contact et complémentaires l'une de l'autre afin d'éviter de permettre à la terre de pénétrer dans ledit espace interne (110), et au moins une position ouverte, les mâchoires (101, 102) comprenant chacune une extrémité proximale (101A, 102A) et une extrémité distale (101B, 102B) et étant reliées au niveau de leurs extrémités proximales (101A, 102A), les extrémités distales (101B, 102B) des mâchoires (101, 102) étant configurées pour décompacter un volume de terre destiné à recevoir le plant, l'une ou l'autre des mâchoires (101, 102) étant pourvue, entre son extrémité proximale (101A, 102A) et son extrémité distale (101B, 102B) d'une ouverture d'accès (101-4) à l'espace interne (110) formé entre les mâchoires (101, 102) en position fermée afin de permettre à un opérateur d'insérer un plant dans ledit espace interne (110), ledit procédé comprenant les étapes de :
- décompactage d'un volume de terre,
- positionnement de la pince (1) en position fermée dans le volume de terre décompacté,
- insertion d'un plant dans l'ouverture d'accès (101-4) jusqu'à l'espace interne (110),
- ouverture des mâchoires (101, 102) afin de libérer le plant dans le volume de terre décompacté, et
- retrait de la pince (1) pour finaliser la plantation du plant.

## Patentansprüche

1. Greifer (1) zum Herausziehen und zum Pflanzen von Pflanzen in der Erde, insbesondere von Rebstöcken, der zur Anbringung an einem Arm eines mechanischen Geräts bestimmt ist, wobei der Greifer (1) ein Betätigungsorgan (20) und zwei Backen (101, 102) umfasst, die dazu ausgelegt sind, von dem Betätigungsorgan (20) zwischen einer geschlossenen Stellung, in welcher die Backen (101, 102) einen Innenraum (110) begrenzen, und mindestens einer geöffneten Stellung, in welcher die Backen (101, 102) voneinander beabstandet sind, um eine Pflanze ergreifen zu können, verlagert zu werden, wobei die Backen (101, 102) jeweils ein proximales Ende (101A, 102A) und ein distales Ende (101B, 102B) umfassen und im Bereich ihrer proximalen Enden (101A, 102A) angelenkt sind, wobei die distalen Enden der Backen (101, 102) dazu ausgelegt sind, sowohl die Erde aufzulockern, insbesondere um die Wurzeln einer Pflanze, als auch eine Pflanze in der Erde zu ergreifen, um sie aus der Erde herauszuziehen, wobei die eine oder die andere der Backen (101, 102) zwischen ihrem proximalen Ende (101A, 102A) und ihrem distalen Ende (101B, 102B) mit einer Zugangsöffnung (101-4) in den Innenraum (110) versehen ist, die das Einführen einer Pflanze in den Innenraum (110) gestattet, damit die Pflanze bei einer Verlagerung der Backen (101, 102) in eine geöffnete Stellung, die ihre Freigabe erlaubt, in die Erde gepflanzt werden kann, wobei der Greifer **dadurch gekennzeichnet ist, dass** die Backen (101, 102) in geschlossener Stellung im Kontakt und komplementär zueinander sind, um zu vermeiden, dass die Erde in den Innenraum (110) eindringen kann.

2. Greifer (1) nach Anspruch 1, wobei die distalen Enden (101B, 102B) der Backen (101, 102) eine abgeschrägte Form aufweisen.

3. Greifer (1) nach vorangehendem Anspruch, wobei der von dem abgeschrägten Abschnitt jedes distalen Endes (101B, 102B) gebildete spitze Winkel kleiner als 30° ist.

4. Greifer (1) nach einem der Ansprüche 2 oder 3, wobei der abgeschrägte Abschnitt jedes distalen Endes (101B, 102B) einen dreieckigen oder kegelstumpfförmigen Querschnitt aufweist.

5. Greifer (1) nach einem der vorangehenden Ansprüche, wobei mindestens das eine der distalen Enden (101B, 102B) der Backen (101, 102) mindestens einen Auflockerungszahn (102-52) umfasst.

6. Greifer (1) nach vorangehendem Anspruch, wobei der Greifer (1) eine obere erste Backe (101) und eine untere zweite Backe (102) umfasst, wobei das distale Ende (102B) der zweiten Backe (102) zwei Auflockerungszähne (102-52) umfasst.

7. Greifer (1) nach einem der vorangehenden Ansprüche, wobei jede Backe (101, 102) zwischen ihrem proximalen Ende (101A, 102A) und ihrem distalen Ende (101B, 102B) zwei Mehrzahlen von Greifzähnen (101-11, 101-21, 102-11, 102-21) umfasst, die jeweils auf einer Seite der Backe (101, 102) angeordnet sind.

8. Greifer (1) nach vorangehendem Anspruch, wobei die zwei Vielzahlen von Greifzähnen (101-11, 101-21) einer Backe (101) zu den zwei Vielzahlen von Greifzähnen (102-11, 102-21) der anderen Backe (102) komplementär sind.

9. Greifer (1) nach einem der vorangehenden Ansprüche, wobei jedes distale Ende (101B, 102B) der Backen (101, 102) eine ebene innere Fläche umfasst, wobei die zwei ebenen inneren Flächen einander zugewandt sind, wenn der Greifer (1) in geschlossener Stellung ist.

10. Greifer (1) nach einem der vorangehenden Ansprüche, wobei mindestens die eine der Backen (101, 102) eine konkave Form aufweist.

11. Greifer (1) nach einem der vorangehenden Ansprüche, wobei das Betätigungsorgan mindestens einen Hydraulikzylinder (20) umfasst, der durch ein Ende mit der einen der Backen (101, 102) und durch sein anderes Ende mit der anderen der Backen (101, 102) derart verbunden ist, dass sie voneinander beabstandet oder einander angenähert werden.

12. Greifer (1) nach einem der vorangehenden Ansprüche, umfassend eine Befestigungsplatte, die dazu ausgelegt ist, den Greifer (1) am Ende eines Arms eines mechanischen Geräts zu befestigen.

13. Greifer (1) nach einem der vorangehenden Ansprüche, umfassend ferner ein Pflanzenverteilungsmodul, das imstande ist, eine Vielzahl von Pflanzen zu lagern und sie einzeln in die Zugangsöffnung (101-4) zu verteilen.

14. Mechanisches Gerät, umfassend einen Arm, der ein Befestigungsende aufweist und einen Greifer (1) nach einem der vorangehenden Ansprüche, der an dem Befestigungsende angebracht ist.

15. Verfahren zum Pflanzen einer Pflanze in der Erde, insbesondere eines Rebstocks, wobei das Verfahren von einem Greifer (1) durchgeführt wird, der an einem Arm eines mechanischen Geräts angebracht ist, wobei der Greifer (1) ein Betätigungsorgan (20) und zwei Backen (101, 102) umfasst, die dazu ausgelegt sind, von dem Betätigungsorgan (20) zwischen einer geschlossenen Stellung, in welcher die Backen (101, 102) einen Innenraum (110) begrenzen und im Kontakt und zueinander komplementär sind, um zu vermeiden, dass die Erde in den Innenraum (110) eindringen kann, und mindestens einer geöffneten Stellung verlagert zu werden, wobei die Backen (101, 102) jeweils ein proximales Ende (101A, 102A) und ein distales Ende (101B, 102B) umfassen und im Bereich ihrer proximalen Enden (101A, 102A) verbunden sind, wobei die distalen Enden (101B, 102B) der Backen (101, 102) dazu ausgelegt sind, ein Volumen Erde aufzulockern, das bestimmt ist, die Pflanze aufzunehmen, wobei die eine oder die andere der Backen (101, 102) zwischen ihrem proximalen Ende (101A, 102A) und ihrem distalen Ende (101B, 102B) mit einer Zugangsöffnung (101-4) in den Innenraum (110) versehen ist, die zwischen den Backen (101, 102) in geschlossener Stellung ausgebildet ist, um es einem Bediener zu erlauben, eine Pflanze in den Innenraum (110) einzuführen, wobei das Verfahren die folgenden Schritte umfasst:
- Auflockern eines Volumens Erde,
- Positionieren des Greifers (1) in geschlossener Stellung in das aufgelockerte Volumen Erde,
- Einführen einer Pflanze in die Zugangsöffnung (101-4) bis zum Innenraum (110),
- Öffnen der Backen (101, 102), um die Pflanze in dem aufgelockerten Volumen Erde freizugeben, und
- Zurückziehen des Greifers (1), um das Pflanzen der Pflanze abzuschließen.

## Claims

1. A clamp (1) for grubbing out and planting seedlings into soil, in particular vine plants, for being mounted on an arm of a mechanical machine, said clamp (1) comprising an actuation member (20) and two jaws (101, 102) configured to be moved by said actuation member (20) between a closed position, wherein said jaws (101, 102) delimit an inner space (110) and at least one open position in which the jaws (101, 102) are separated from each other in order to grab a plant, the jaws (101, 102) each comprising a proximal end (101 A, 102A) and a distal end (101B, 102B) and being articulated at their proximal ends (101 A, 102A), the distal ends of the jaws (101, 102) being configured both to decompact the soil, in particular around the roots of a plant, and to grab a plant in soil in order to pull it out of the soil, either jaw (101, 102) being provided, between its proximal end (101A, 102A) and its distal end (101B, 102B), with an access opening (101-4) to the inner space (110) allowing insertion of a plant in said inner space (110) so that said plant can be planted in soil during movement of the jaws (101, 102) in an open position allowing its release, said clamp being **characterised in that** in the closed position, said jaws (101, 102) are in contact with and complementary to each other in order to avoid allowing the earth to enter said inner space (110).

2. The clamp (1) according to claim 1, wherein the distal ends (101B, 102B) of the jaws (101, 102) have a bevelled shape.

3. The clamp (1) according to the preceding claim, wherein the acute angle formed by the bevelled portion of each distal end (101B, 102B) is less than 30°.

4. The clamp (1 ) according to any of claims 2 or 3, wherein the bevelled portion of each distal end (101B, 102B) has a triangular or frustoconical cross-section.

5. The clamp (1) according to any of the preceding claims, wherein at least one of the distal ends (101B, 102B) of the jaws (101, 102) comprises at least one decompaction tooth (102-52).

6. The clamp (1) according to the preceding claim, wherein the clamp (1) comprising a first, upper jaw (101), and a second, lower jaw (102), the distal end (102B) of the second jaw (102) comprises two decompaction teeth (102- 52).

7. The clamp (1) according to any of the preceding claims, wherein each jaw (101, 102) comprises, between its proximal end (101A, 102A) and its distal end (101B, 102B), two pluralities of gripping teeth (101-11, 101-21, 102-11, 102-21) each disposed on one side of said jaw (101, 102).

8. The clamp (1) according to the preceding claim, wherein the two pluralities of gripping teeth (101-11, 101-21) of a jaw (101) are complementary to the two pluralities of gripping teeth (102-11, 102-21) of the other jaw (102).

9. The clamp (1) according to one of the preceding claims, wherein each distal end (101 , 102B) of the jaws (101, 102) comprises a planar inner face, the two planar inner faces facing each other when the clamp (1) is in the closed position.

10. The clamp (1) according to any of the preceding claims, wherein at least one of the jaws (101, 102) has a concave shape.

11. The clamp (1) according to one of the preceding claims, wherein the actuation member comprises at least one hydraulic cylinder (20) connected through one end to one of the jaws (101, 102) and through its other end to the other of the jaws (101, 102) so as to move them closer to or away from each other.

12. The clamp (1) according to one of the preceding claims, comprising an attachment plate configured to attach the clamp (1) to the end of an arm of a mechanical machine.

13. The clamp (1) according to one of the preceding claims, further comprising a plant dispensing module capable of storing a plurality of plants and dispensing them one by one in the access opening (101-4).

14. A mechanical machine comprising an arm, comprising an attachment end, and a clamp (1), according to one of the preceding claims, mounted to said attachment end.

15. A method for planting a plant into soil, especially a vine plant, said method, implemented by a clamp (1) mounted to an arm of a mechanical machine, said clamp (1) comprising an actuation member (20) and two jaws (101, 102) configured to be moved by said actuation member (20) between a closed position, in which said jaws (101, 102) delimit an inner space (110) and are in contact with and complementary to each other in order to avoid allowing the soil to penetrate said inner space (110), and at least one open position, the jaws (101, 102) each comprising a proximal end (101A, 102A) and a distal end (101B, 102B) and being connected at their proximal ends (101A, 102A), the distal ends (101B, 102B) of the jaws (101, 102) being configured to decompact a volume of soil for receiving the plant, either jaw (101, 102) being provided, between its proximal end (101A, 102A) and its distal end (101B, 102B) with an access opening (101-4) to the inner space (110) formed between the jaws (101, 102) in the closed position in order to allow an operator to insert a plant into said inner space (110), said method comprising the steps of:
- decompacting a soil volume,
- positioning the clamp (1) in the closed position in the soil volume decompacted,
- inserting a plant into the access opening (101-4) up to the inner space (110),
- opening the jaws (101, 102) in order to release the plant into the soil volume decompacted, and
- removing the clamp (1) to complete planting the plant.
